# EUROPEAN PATENT APPLICATION

(11) **EP 2 858 077 A1**
(43) Date of publication of application: **08.04.2015**
(21) Application number: 13187098.2
(22) Date of filing: 02.10.2013
(51) Int. Cl.: H01F 27/40

(54) **Safety device for an electric transformer, and related electric transformer using such a safety device**

(71) Applicant: ABB Technology AG, 8050 Zürich (CH)
(72) Inventor: Tonin, Andrea, 36070 Brogliano (VI) (IT); Carollo, Carlo, 36016 Thiene (VI) (IT); Manco, Giuseppe Leonardo, 87029 Scalea (CS) (IT)
(74) Representative: De Santis, Giovanni

(57) **Abstract**

Safety device safety for an electric transformer comprising a tank (102) containing a fluid (103), comprising:
- a shaped body suitable to be connected with the transformer tank; and
- a plurality of sensing means (10) which are configured to output signals indicative of a corresponding plurality of transformer parameters;
- an electronic unit (20 which is positioned inside the shaped body and is in operative communication with the plurality of sensing means (10), the electronic unit being configured to elaborate, based on the signals output by the plurality of sensing means, data related to the corresponding plurality of transformer parameters.

## Description

The present disclosure relates to a safety device for an associated electric transformer, and to an electric transformer comprising such a safety device.

It is widely known in the art the use of electrical induction devices, e.g. power transformers, which exploit the electromagnetic induction for properly transmitting and distributing electricity over power lines.

Most common power transformers comprise live parts, e.g. a magnetic core and a certain number of windings, for instance low-voltage windings, high-voltage windings, et cetera.

Due to the intrinsic structural characteristics and functioning of these devices, important aspects of power transformers concern the electric insulation among the various components and cooling thereof which must be guaranteed in order to provide the desired electromagnetic performance without incurring in any malfunctioning or damage.

To this end, a power transformer comprises usually a closed main tank which is filled with an insulating fluid and which houses the live parts; the insulating fluid is usually a liquid, for example a highly-refined mineral oil that is stable at high temperatures and has excellent electrical insulating properties; combustion-resistant vegetable oil-based dielectric coolants are also becoming increasingly common as alternatives to mineral oils.

In addition, power transformers are usually provided with expansion vessels generally indicated as oil conservators; such conservators are positioned above the main tank, and have the function of compensating the unavoidable volume changes of the cooling fluid used in the tank, which volume changes result mainly from temperature fluctuations.

Since the insulating fluid helps cooling the transformer and also contributes to the electrical insulation between live parts inside the tank, it must remain stable at high temperatures for an extended period.

Therefore, as defined also for example by international standards, e.g. rule EN 50216-3, a safety device or protective relay is normally used in a power transformer in order to check some parameters which are indicative of and relevant for the correct operations of the transformer itself.

Indeed, during the working life of a power transformer, it is for instance possible that gas is generated or present inside the tank and this is a clear indication of a possible problem; for example, the gas may be the result of decomposition/degradation of the solid or liquid insulation inside the transformer caused by overheating or by the strike of electric arcs and can lead to fluid pressures which are dangerous. Also the temperature of the insulating fluid or the level thereof may reach some threshold values which are not acceptable.

Although these known safety devices perform their functions in a quite satisfying way, there are some aspects that can be improved.

For instance, available safety devices comprise one or more limit switches whose thresholds are pre-set and cannot be changed; hence when the threshold value of the corresponding transformer parameter is reached, the associated limit switch intervenes and puts the transformer out of order.

Therefore, it is not possible to properly monitor the transformer parameters over the time and even remotely; further, the constructive layout for and the way of monitoring at least some transformer parameters can be optimized.

Hence, the present disclosure provides a safety device for an electric transformer comprising a tank containing a fluid, the safety device being **characterized in that** it comprises:
- a shaped body suitable to be connected with said tank;
- a plurality of sensing means which are configured to output signals indicative of a corresponding plurality of transformer parameters;
- an electronic unit which is positioned inside said shaped body and is in operative communication with said plurality of sensing means, said electronic unit being configured to elaborate, based on said signals output by said plurality of sensing means, data related to said corresponding plurality of transformer parameters.

Detailed characteristics and advantages will become apparent from the description of some preferred but not exclusive embodiments of a safety device according to the present disclosure, illustrated only by way of non-limitative examples with the accompanying drawings, wherein:
figure 1 is a perspective view schematically illustrating a safety device according to the present disclosure;
figure 2 is a perspective view showing the safety device of figure 1 partially cut;
figure 3 is another perspective view showing in detail a portion of the safety device of figures 1 and 2;
figure 4 is a cross section illustrating a safety device according to the present disclosure schematically connected with the tank of an associated electric transformer;
figure 5 illustrates schematically some optical means which can be used in the safety device according to the present disclosure;
figure 6 is a perspective view showing an exemplary pressure sensor which can be used in the safety device according to the present disclosure;
figure 7 is another perspective view illustrating the safety device of figure 1;
figure 8 illustrates an exemplary electric transformer which can be equipped with a safety device 100 according to the present disclosure.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped" is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

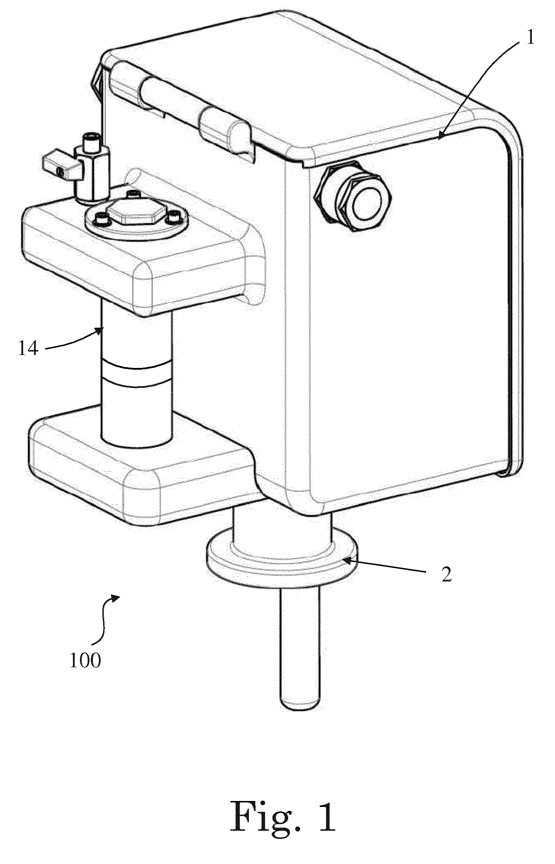

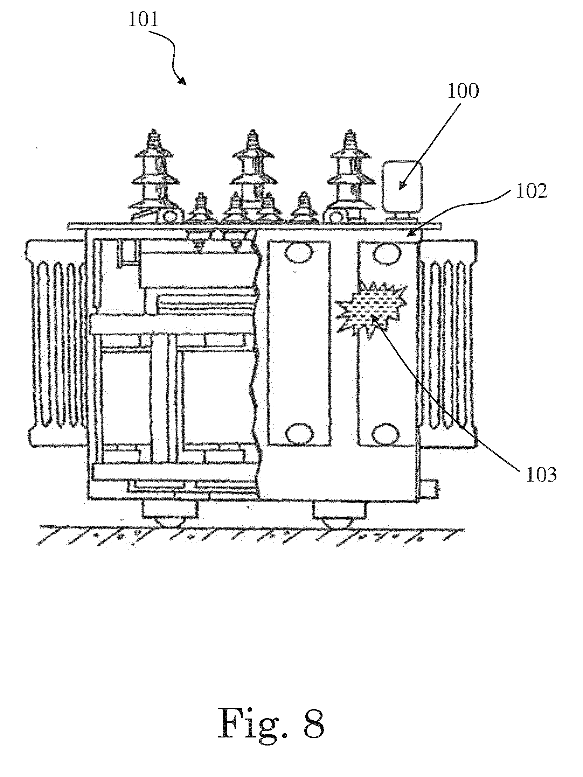

Figure 1 shows an exemplary safety device 100 which is suitable to be connected to an electric transformer such as the exemplary one, namely a hermetically sealed transformer represented in figure 8 by the reference number 101. According to solutions well known in the art and therefore not described herein in details, the electric transformer 101 comprises a tank 102 filled with a fluid 103, namely a cooling/insulating liquid 103 (hereinafter referred to as the "fluid 103" for the sake of conciseness) of a type known per se, e.g. a mineral or vegetal oil; however, the safety device 100 according to the present disclosure can be used likewise with other types of electric transformers, e.g. those provided with an expansion vessel or conservator which is also filled with the cooling liquid 103 and is mechanically connected to the tank 102.

As illustrated, the safety device 100 according to the present disclosure comprises:
- a shaped body 1 which is suitable to be connected with the tank 102, for example through a base flange 2 which can be mechanically connected, e.g. screwed, onto the tank 102; and
- a plurality of sensing means, indicated by the cumulative reference number 10, which are configured to substantially continuously output signals indicative of a corresponding plurality of transformer parameters.

In particular, and as it will be described more in detail hereinafter, such a plurality of sensing means 10 are configured to check some parameters related to the fluid 103, which parameters are indicative of the proper working conditions of the transformer 101 itself.

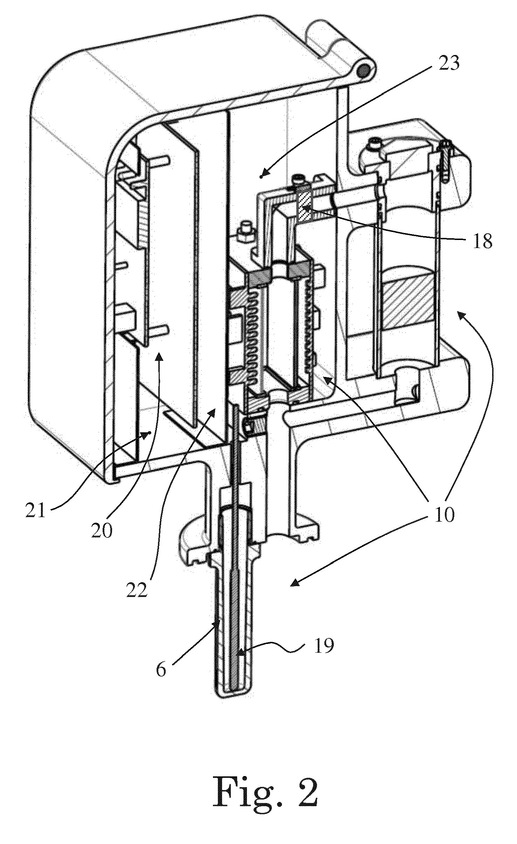

As illustrated in figure 2, the safety device 100 according to the present disclosure comprises an electronic unit 20 which is positioned inside a dedicated room 21 of the shaped body 1 and is in operative communication, e. through cabling, with the plurality of sensing means 10. The dedicated room 21 is separated by a wall 22 from a second room 23 inside which there are positioned at least some of the plurality of sensing means 10.

In particular, the electronic unit 20 is configured to substantially continuously elaborate, based on the received signals output by the plurality of sensing means 10, data related to the corresponding plurality of transformer parameters monitored.

The electronic unit 20 comprises for example a printed circuit board ("PCB") which is associated with a microprocessor; as those skilled in the art may appreciate, the electronic unit 20 can comprise any suitable PCB and associated micro-processor which elaborates digital data and outputs corresponding digital signals, e.g. a micro-processor NXP type LPC210 and a related PCB which can be easily adapted to the scope of the present application.

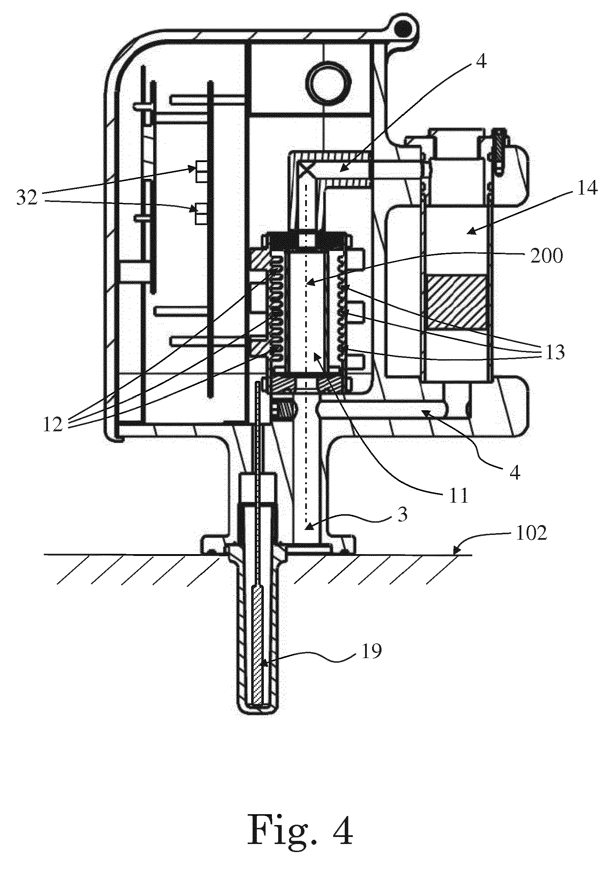

As illustrated in more details in figures 2 and 4, the safety device 100 comprises first sensing means for sensing the level of the fluid 103 contained inside the tank 102; in particular, such first sensing means comprise a first reservoir 11 which is positioned inside the shaped body 1 and is suitable to be in hydraulic communication, e.g. by means of an inlet duct 3 with the inside of the tank 102 and to be at least partially filled with the same fluid 103.

Further, the first sensing means comprise optical means which are operatively associated with the first reservoir 11 for optically sensing the level of the fluid 103 inside the tank 102.

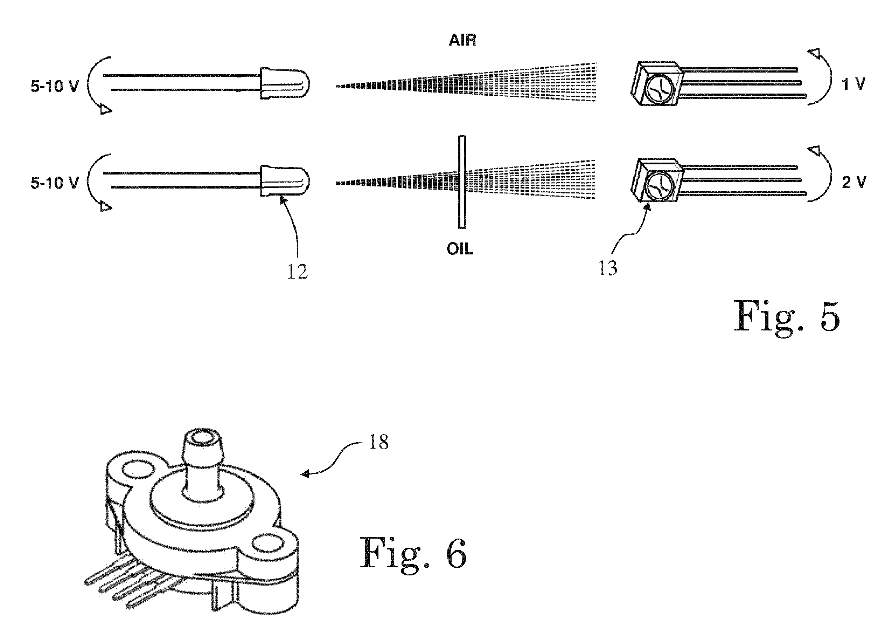

In the exemplary embodiment illustrated, and as schematically represented in figure 5, the optical means according to the present disclosure comprise one or more couples of mutually associated emitters 12-receivers 13 which are placed along the walls of the first reservoir 1, e.g. along two respective rows symmetrically with respect to a longitudinal axis 200 of the first reservoir 1; in particular each emitter 12 comprises a LED 12 which is for example fed through the electronic unit 20, and each associated receiver 13 is connected, e.g. cabled, with the electronic unit 20 itself.

In practice, the intensity of the light emitted by each LED 12 and passing through the inside of the first reservoir 11 is modified according to the mean traversed, e.g. the mineral oil 103 or air/gas present inside the first reservoir 11; accordingly, each receiver 13 captures a certain light intensity and outputs towards the electronic unit 20 a corresponding signal, e.g. a voltage signal, which is proportional to the light intensity captured; this signal is indicative of the level of the fluid 103, e.g. oil, inside the first reservoir 11, and therefore of the level of insulating/cooling fluid 103 present inside the tank 102.

In particular, the electronic unit 20 receives in input signals output by all emitters 13 and continuously elaborate data indicative of the fluid level inside the tank 102.

In the safety device 100 according to the present disclosure, the first sensing means further comprise a second reservoir 14 which is in communication with the reservoir 11, is suitable to be at least partially filled with the fluid 103, and is positioned at least partially external to the shaped body 1 as for example visible in figure 4

In the exemplary embodiment illustrated the second reservoir 14 is in communication with the first reservoir 11 through a couple of duct sections 4; the lower duct section 4 puts the second reservoir 14 in communication also with the inlet duct 3 and therefore with the inside of the tank 102, thus forming a hydraulic loop.

The second reservoir 14 is configured so as to make externally visible the level of fluid 103 contained inside it which is also an indication of the level of fluid 103 inside the tank 102; for example the lateral walls of the second reservoir 14 can be made of transparent material.

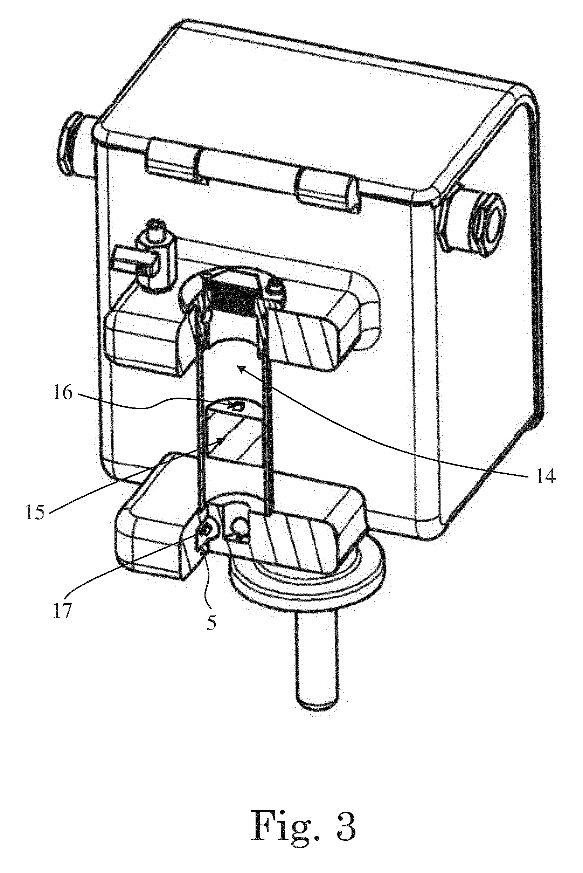

As illustrated in the exemplary embodiment of figure 3, the first sensing means comprise a float 15 which is positioned movable inside the second reservoir 14.

Preferably a magnet 16 is operatively coupled with the float 15, e.g. it is mounted on and moves together with the float 15; a magnetic switch 17, e.g. a reed, is for example positioned at the bottom of the second reservoir 14 inside a housing 5 of the shaped body 1.

In practice, when the level of fluid 103 reaches a minimum or threshold level inside the second reservoir 14, the float 15 reaches an end-stroke position and the magnet 16 actuates the magnetic switch 17. In turn the magnetic switch 17 outputs a signal which for instance can switch off the electric transformer 101 or trigger an alarm signal.

In this way, the level of fluid 103 is monitored by an additional and redundant system which can replace the electronic unit 20 in case this latter does not work properly for whatever reason.

In the exemplary embodiment illustrated, and as for example schematically represented in figure 2, the plurality of sensing means 10 comprises a pressure sensor 18 for sensing the pressure of the fluid 103 inside the tank; the sensor 18 is operatively associated, e.g. mechanically connected, to one of the duct sections 4, for instance between the forst reservoir 11 and the second reservoir 14, and is also operatively connected, e.g. cabled, with the electronic unit 20.

Figure 6 shows an exemplary pressure sensor 18; such a sensor 18 can be for example an integrated pressure sensor, such as model type MPX2202GS commercialized by Freescale.

In addition, according to another exemplary embodiment illustrated in figure 4, in the safety device 100 according to the present disclosure, the plurality of sensing means 10 comprise a temperature sensor 19 for sensing the temperature of the fluid 103 inside the tank 102; as illustrated, the temperature sensor 19 is placed inside a housing 6 which protrudes outwardly from the shaped body 1, and extends over the flange 2 so as to enter into the tank 102 when the safety device 100 is connected to the associated transformer 101.

An example of temperature sensor 19 is a thermometric probe PT100; however, any commercially available temperature sensor suitable for the application can be used. According to a preferred embodiment, the safety device 100 comprises adjusting means 30 for selectively adjusting threshold values associated each to a corresponding parameter of the plurality of transformer parameters monitored.

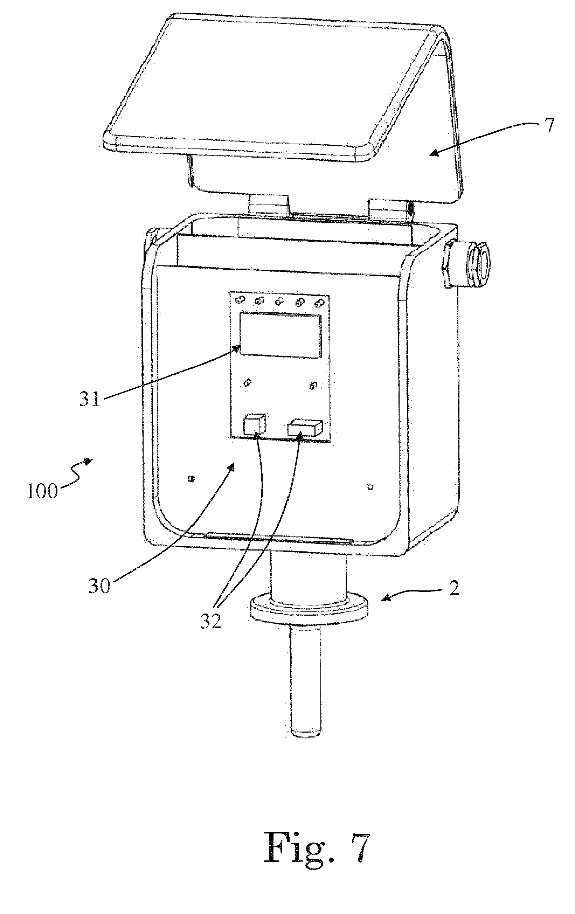

In particular, as illustrated in figure 7, the adjusting means 30 comprise a Human Machine Interface (HMI) 31 which is in operative communication with the electronic unit 20 and is adapted, e.g. by means of a keypad and a display, for locally adjusting the threshold values, for instance by an operator who inputs relevant data "in situ".

For example as illustrated in figure 7, the shaped body 1 comprises a lid 7 which can be opened by a user so as to have direct access to the HMI 31.

In addition and/or in alternative, the safety device 100 comprises an input and an output port 32 which are in operative communication with the electronic unit 20 and are suitable to be operatively connected, e.g. cabled, to a remote control unit for remotely adjusting the threshold values.

In practice when the safety device 100 is connected to an electric transformer 101 which is under operations, the electronic unit 20 receives continuously signals output by the various sensing means; based on the signals received, the electronic unit 20 continuously elaborates data related to the various parameters monitored, e.g. as above described, temperature, level and pressure of the fluid 103 inside the tank 101. Such data can be also stored locally and/or transmitted remotely, e.g. through a cabled transmission, such as Modbus, 4-20mA, etc. When any of the parameters monitored reaches a pre-set threshold indicating that the transformer 101 is not operating properly, the electronic unit 20 can issue an alarm signal or even cause switching off the transformer itself.

As before described, each threshold can be selectively adjusted according to the need of each specific application either locally, e.g. acting directly on the HMI of the device 100 itself, or remotely by means of the cabled transmission previously mentioned.

In practice, it has been found that the safety device 100 according to the present disclosure offers a solution which allows continuously monitoring some transformer parameters and selectively adjusting also related thresholds. In particular, it is even possible to set two more thresholds for the same parameter monitored, for example a first alarm threshold and a second intervention threshold.

These results are achieved according to a very simple constructive layout which makes the safety device 100 according to the present disclosure suitable for application in principle with any type of electric transformers filled with a cooling/insulating fluid.

Hence, the present disclosure also encompasses an electric transformer 101 comprising at least one safety device 100 of the type previously described and as defined in the appended claims; clearly more than one safety device 100 can be used in a single transformer.

The safety device 100 thus conceived is susceptible of modifications and variations, all of which are within the scope of the inventive concept as defined in particular by the appended claims; any possible combination of the previously disclosed embodiments/alternatives, taken as whole or in part, can be implemented and has to be considered within the inventive concept of the present disclosure. All the details may furthermore be replaced with technically equivalent elements and any of the previously described components may be differently shaped, or used in a different number or parts or elements, or the components previously described can be differently connected with respect to each other, provided they are suitable for the scope they are devised for.

Also the materials used, so long as they are compatible with the specific use and purpose, as well as the dimensions, may be any according to the requirements and the state of the art.

## Claims

1. A safety device (100) for an electric transformer (101) comprising a tank (102) containing a fluid (103), the safety device being **characterized in that** it comprises:
- a shaped body (1) suitable to be connected with said tank (102);
- a plurality of sensing means (10) which are configured to output signals indicative of a corresponding plurality of transformer parameters;
- an electronic unit (20) which is positioned inside said shaped body and is in operative communication with said plurality of sensing means (10), said electronic unit (20) being configured to elaborate, based on said signals output by said plurality of sensing means, data related to said corresponding plurality of transformer parameters.

2. Safety device (100) according to claim 1, **characterized in that** said sensing means (10) comprise first sensing means for sensing the level of said fluid (103) contained inside said tank (102), wherein said first sensing means comprise a first reservoir (11) which is positioned inside said shaped body (1) and is suitable to be in communication with the inside of said tank (102) and to be at least partially filled with said fluid (103), and optical means operatively associated with said first reservoir (11) for optically sensing the level of said fluid (103).

3. Safety device (100) according to claim 2, wherein said optical means comprise one or more couples of mutually associated emitters (12)-receivers (13) which are placed along the walls of said first reservoir (11).

4. Safety device (100) according to claim 3, wherein each emitter (12) comprises a LED and each receiver (13) is connected with and outputs towards said electronic unit (20) a signal indicative of the level of said fluid (103).

5. Safety device (100) according to one or more of claims 2-4, wherein said first sensing means further comprise a second reservoir (14) which is in communication with said first reservoir (11) and is suitable to be at least partially filled with said fluid (103), said second reservoir (14) being configured so as to make externally visible the level of fluid (103) contained inside it.

6. Safety device (100) according to claim 5, wherein said first sensing means comprise a float (15) which is positioned movable inside said second reservoir (14).

7. Safety device (100) according to claim 6, wherein it comprises a magnet (16) operatively coupled with said float (15) and a magnetic switch (17) which is actuated by said magnet (16) when said float (15) reaches a threshold position.

8. Safety device (100) according to one or more of the previous claims, wherein said plurality of sensing means (10) comprise a pressure sensor (18) for sensing the pressure of said fluid (103), said pressure sensor (18) being operatively connected with said first reservoir (11) and said electronic unit (20).

9. Safety device (100) according to one or more of the previous claims, wherein said plurality of sensing means (10) comprises a temperature sensor (19) for sensing the temperature of said fluid (103), said temperature sensor (19) being placed inside an outwardly protruding housing (2) of said shaped body (1).

10. Safety device (100) according to one or more of the previous claims, wherein it further comprise adjusting means (30) for selectively adjusting threshold values associated each to a corresponding parameter of said plurality of transformer parameters.

11. Safety device (100) according to claim 10, wherein said adjusting means (30) comprise a Human Machine Interface (31) which is in operative communication with said electronic unit (20) and is adapted for locally adjusting said threshold values.

12. Safety device (100) according to claim one or more of the previous claims, wherein said shaped body (1) comprises an opening lid (7).

13. Safety device (100) according to one or more of the previous claims, wherein it further comprises an input and an output port (32) which are in operative communication with said electronic unit (20) and are suitable to be operatively connected to a remote control unit for remotely adjusting said threshold values.

14. Electric transformer (101) comprising a tank (102) at least partially filled with a fluid (103), **characterized in that** it comprises at least one safety device (100) according to one or more of the previous claims.
